# EUROPEAN PATENT SPECIFICATION

(11) **EP 1 418 599 B1**
(45) Date of publication and mention of the grant of the patent: **17.11.2010**
(21) Application number: 01951904.0
(22) Date of filing: 18.07.2001
(51) Int. Cl.: H01G 9/055, H01G 9/04

(54) **ALUMINUM FOIL FOR ELECTROLYTIC CAPACITOR**
ALUMINIUMFOLIE FÜR EINEN ELEKTROLYTKONDENSATOR
FEUILLE ALUMINIUM POUR CONDENSATEUR ELECTROLYTIQUE

(43) Date of publication of application: 12.05.2004
(73) Proprietor: SHOWA DENKO K.K., Tokyo 105-8518 (JP)
(72) Inventor: MOTOZAWA, Masahiro, Nihon Parkerizing Co., Ltd., Tokyo 103-0027 (JP); ONO, Yoji, Nihon Parkerizing Co., Ltd., Tokyo 103-0027 (JP); MORITA, Ryoji, Nihon Parkerizing Co., Ltd., Chuo-ku, Tokyo 103-0027 (JP); FUJIHIRA, Tadao, Showa Denko K.K., Sakai Reg. Of., Sakai-shi, Osaka 590-0982 (JP); WATANABE, Kiyoshi, Showa Den. K.K., Sakai Reg Of., Sakai-shi, Osaka 590-0982 (JP); ISOYAMA, Eizo, Showa Denko K.K., Sakai Reg Of., Sakai-shi, Osaka 590-0982 (JP)
(74) Representative: Viering, Jentschura & Partner
(86) International application number: PCT/JP2001/006216
(87) International publication number: WO 2003/009321

(56) References cited:
- JP-A- 1 316 924
- JP-A- 6 346 260
- JP-A- 7 094 370
- JP-A- 9 129 513
- JP-A- 63 124 406
- JP-A- 2000 313 932
- US-A1- 5 211 769

## Description

### Technical Field

The present invention relates to an aluminum foil to be used as electrolytic capacitor electrodes and the method of manufacturing the same.

### Background Art

In recent years, in accordance with the miniaturization of electronics devices, it has been desired to increase capacitance of an aluminum foil for electrolytic capacitor electrodes to be built in electronics devices.

In general, aluminum materials to be used as electrolytic capacitor electrodes are subjected to etching treatment to enhance the surface increasing rate to thereby increase the capacitance. As the depth of etching pit to be formed by the etching treatment increases, the surface increasing rate increases. Therefore, to improve the etching aptitude, an aluminum material is subjected to various treatments as pretreatment. Examples of such treatments include an adjustment of the (100) crystal orientation, an adjustment of the composition by adding minute impurities such as Pb or Bi to the aluminum material, degreasing washing before the final annealing, hydration treatment before the final annealing and crystalline oxide film forming treatment at the final annealing, and oxidation treatment before the final annealing (see, e.g., Japanese Examined Laid-open Patent Publication No. S58-34925, Japanese Unexamined Laid-open Patent Publication No. H3-122260).

Furthermore, simply increasing the depth of each etching pit is not enough to increase the surface increasing rate of an aluminum foil. To further increase the surface increasing rate, it is necessary to suppress local etching, non-etching and surface dissolution to form etching pits uniformly on the etching surface at high density.

However, the aforementioned methods were not enough in terms of forming etching pits uniformly at high density, and therefore could not meet the demand of attaining high capacitance which is being increased.

### Disclosure of Invention

In view of the aforementioned technical background, the present invention aims to provide an aluminum foil for electrolytic capacitor electrodes capable of assuredly increasing a surface increasing rate by forming deep etching pits uniformly at high density to further increase capacitance, and also to provide a method of manufacturing the aluminum foil.

In this specification, the wording of "aluminum" is used within the meaning including both aluminum and its alloy.

In order to attain the aforementioned object, the basic concept of the aluminum foil for electrolytic capacitor electrodes according to the present invention resides in that zinc phosphate composite particles containing at least zinc and phosphorous are adhered to a surface of a foil substrate.

Furthermore, the basic concept of the aluminum foil for electrolytic capacitor electrodes according to the present invention also resides in that zinc phosphate composite particles containing at least zinc and phosphorous and further containing one or more elements selected from the group consisting of iron, manganese, nickel, cobalt, calcium and magnesium are adhered to a surface of a foil substrate.

In the aforementioned aluminum foils for electrolytic capacitor electrodes, it is preferable that the zinc phosphate composite particles each having a mean circle equivalent diameter of 0.1 µm or more are adhered to the surface of the foil substrate at a rate of 70,000 pieces/mm² or more and that the adhered amount thereof is 0.01 to 5 g/m². Furthermore, it is more preferable that the zinc phosphate composite particles are adhered to the surface of the foil substrate at a rate of 200,000 pieces/mm² or more and that the adhered amount thereof is 0.1 to 3 g/m².

In order to attain the aforementioned object, the basic concept of the method of manufacturing an aluminum foil for electrolytic capacitor electrodes according to the present invention resides in that a foil substrate is subjected to chemical conversion treatment to deposit zinc phosphate composite particles containing at least zinc and phosphorous on a surface of a foil substrate by immersing the foil substrate in treatment liquid containing phosphoric acid; fluorine compound, zinc or zinc compound, and pro-oxidant.

The basic concept of the method of manufacturing an aluminum foil for electrolytic capacitor electrodes according to the present invention also resides in that a foil substrate is subjected to chemical conversion treatment to deposit zinc phosphate composite particles containing at least zinc and phosphorous and further containing one or more elements selected from the group consisting of iron, manganese, nickel, cobalt, calcium and magnesium on a surface of a foil substrate by immersing the foil substrate in treatment liquid containing phosphoric acid, fluorine compound, zinc or zinc compound and pro-oxidant and further containing one or more elements selected from the group consisting of iron, manganese, nickel, cobalt, calcium and magnesium and compound thereof.

In the aforementioned method of manufacturing an aluminum foil for electrolytic capacitor electrodes, it is preferable that the chemical conversion treatment is performed after a foil rolling step but before or after a final annealing step in aluminum foil manufacturing steps. It is also preferable that surface preparation treatment is performed before the chemical conversion treatment.

In the aluminum foils for electrolytic capacitor electrodes according to the present invention, zinc phosphate composite particles containing at least zinc and phosphorous are adhered to the surface of the foil substrate. Since zinc phosphate composite particles can be easily dissolved in acid fluid whose pH is 3 or less, when etching is performed in acid fluid such as hydrochloric acid, the zinc phosphate composite particles will be dissolved preferentially to cause etch pit generating nuclei. In a foil to which zinc phosphate composite particles are adhered finely at high density, a number of etch pits can be formed, increasing the surface increasing rate, which enables higher capacitance. Furthermore, since the reaction rate (rate of dissolution) at the time of etching is fast, prescribed etch pits can be formed even at lower etching electric charge. This is advantageous from the viewpoint of energy saving.

The aforementioned zinc phosphate composite particles allow, other than zinc and phosphorous, the existence of fluorine compound particles or aluminum compound particles such as AlF₃ derived from the treatment liquid using zinc phosphate composite particles giving treatment or the foil substrate.

Furthermore, in the aluminum foil for electrolytic capacitor electrodes, the zinc phosphate composite particles contain, other than zinc and phosphorous, one or more elements selected from the group consisting of iron, manganese, nickel, cobalt, calcium and magnesium.

The zinc phosphate composite particles can remarkably increase the surface increasing rate due to etching by adjusting the particle size and/or the adhered amount. It is preferable that the zinc phosphate composite particles each having a mean circle equivalent diameter of 0.1 µm or more exist at a rate of 70,000 pieces/mm² or more. If the particle is a ultramicroscopic particle having a mean circle equivalent diameter of below 0.1 µm, it cannot cause an etch pit generating nucleus. If the number of particles is below 70,000 pieces/mm², the number of etch pit generating nucleus is insufficient, resulting in insufficient surface increasing rate. The more preferable mean circle equivalent diameter is 0.3 µm or more, and the more preferable number of particles is 200,000 pieces/mm² or more. Although the present invention does not define the upper limit of the particle size and the number of particles, it is preferable that the particle size is 10 µm or less and the number of particles is 1,000,000 pieces/mm² to prevent generation of huge pits and/or entire dissolution. The preferable adhered amount can be represented by 0.01 to 5 g/m². If the adhered amount is less than 0.01 g/m², the number of etch pit generating nuclei becomes insufficient. To the contrary, if it exceeds 5 g/m², the entire dissolution may occur. The preferable lower limit is 0.1 g/m², and the preferable upper limit is 3 g/m².

Adhesion of zinc phosphate composite particles to a surface of a foil substrate can be attained by chemical conversion treatment based on the methods of manufacturing an aluminum foil for electrolytic capacitor electrodes according to the present invention.

As treatment liquid for the chemical conversion treatment, mixed acid solution containing phosphoric acid, fluorine compound, zinc or zinc compound and pro-oxidant is used. A foil substrate is immersed in this treatment liquid to deposit zinc phosphate composite particles on the surface of the foil substrate. In this treatment liquid, zinc phosphate (Znₐ(PO₄)₃) or hydrate thereof (Zn₃(PO₄)₂·4H₂O) is produced and deposited on the surface of the foil substrate, and the substrate surface is etched by fluorine ion (F⁻) derived from fluorine compounds. The aluminum ion (AL³⁺) eluted by the etching reacts with fluoric ion to generate aluminum fluoride (AlF₃) some of which are deposited on the surface of the foil substrate to constitute a part of zinc phosphate composite particles.

Zinc phosphate composite particles containing iron, manganese, nickel, cobalt, calcium and/or magnesium can be obtained by using treatment liquid for the chemical conversion treatment to which iron, manganese, nickel, cobalt, calcium and/or magnesium or compound thereof are added. In this case, phosphate (M₃(PO₄)₂) containing the aforementioned metal (M) or hydrate thereof (M₃(PO₄)₂·4H₂O) can be deposited on the surface of the foil substrate.

In the aforementioned treatment liquid, the following component can be preferably used.

It is recommended to use HF, H₂SiF, NaF, KF, NH₄F, HFNaF, HFKF, HFNH₄F, etc. as the fluorine compound, and zinc simple substance, zinc oxide (ZnO), Zn(No₃)₂, ZnCO₃, ZnSO₄, Zn(OH)₂, ZnCl₂ or hydrate thereof as zinc or compound thereof. It is also recommended to use each metal simple substrate (M), metal (M) oxide (MO), M(NO₃)₂, MCO₃, MSO₄, M(OH)₂, MCl₂ or hydrate thereof as metal (M) or compound thereof other than iron, manganese, nickel, cobalt, calcium and magnesium. Further, it is recommended to use nitric, nitrous acid, chloric acid, bromic acid, or salt thereof as pro-oxidant.

Prior to the chemical conversion treatment, it is preferable to perform surface preparation treatment to finely deposit zinc phosphate composite particles. Titanium colloid can be preferably used as the treatment liquid for the surface preparation treatment, and the surface preparation treatment can be executed by immersing the foil substrate in this treatment liquid.

Furthermore, prior to the surface preparation treatment, it is preferable to perform pretreatment for eliminating contamination such as dirt or oil on the surface of the foil substrate. As the treatment liquid for the pretreatment, it is preferable to use mixed solution of chelating agent, surfactant and the like to enhance the uniformity of the etching performance of the surface of the foil substrate during the alkaline-degreasing washing.

In general, the foil substrate is manufactured through the steps of homogenization treatment of an aluminum slab, facing, hot-rolling, cold-rolling including intermediate annealing, foil rolling, washing, final annealing. The chemical conversion treatment for giving zinc phosphate composite particles or the sequence of zinc phosphate composite particle giving pretreatment including the pretreatment and the surface preparation treatment before the chemical conversion treatment is performed after the foil rolling but before or after the final annealing. In cases where the zinc phosphate composite particle giving treatment is performed after the foil rolling, the final annealing can be performed after the treatment, or the foil can be subjected to etching treatment as a hard foil without performing final annealing.

Although it is preferable that aluminum as foil material is high-purity aluminum of 99.6% purity or more, the aluminum is not limited to the above and can be any material capable of being used as electrolytic capacitor electrode material.

### Brief Description of Drawings

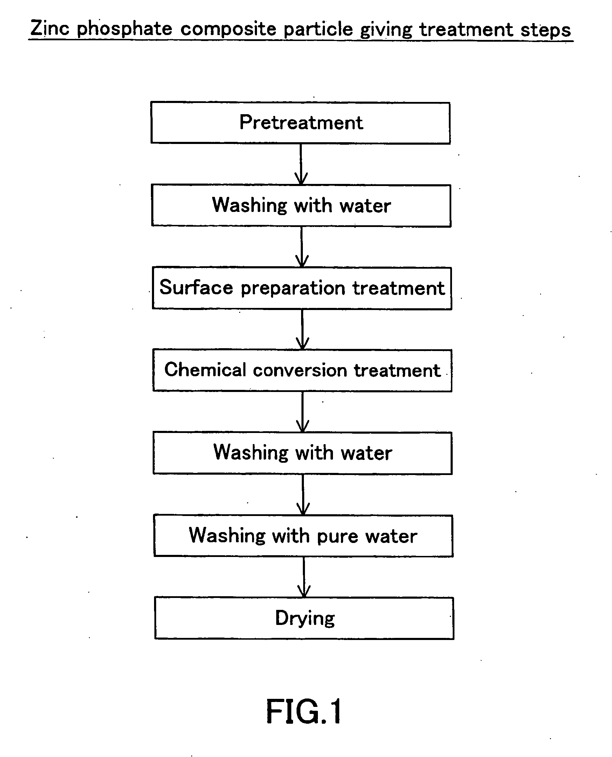

Fig. 1 is a flowchart showing the zinc phosphate composite particle giving treatment steps of the method of manufacturing an aluminum foil for electrolytic capacitor electrodes.

### Best Mode for Carrying Out the Invention

In Examples 1 to 3, plural kinds of foil substrates different in aluminum purity and foil thickness were manufactured, zinc phosphate composite particle giving treatments were given to the surfaces of these foil substrates under different conditions.

In each example, each foil substrate was manufactured through the steps of homogenization treatment of an aluminum slab by a common procedure, facing, hot-rolling, cold-rolling including intermediate annealing, foil rolling into a predetermined thickness, washing, and then final annealing. In the sequence of the foil manufacturing steps, zinc phosphate composite particle giving treatment was performed either after the final annealing or after the foil rolling. In Examples 1 and 3, the zinc phosphate composite particle giving treatment was performed after the final annealing, and then the etching was performed. In Example 2, the zinc phosphate composite particle giving treatment was performed after the foil rolling, and then the etching was performed without performing the final annealing. The final annealing was performed for 5 hours at 500°C or 300°C in inert atmosphere in each case.

The steps of zinc phosphate composite particle giving treatment are shown in Fig. 1, and the detail treatment conditions are shown in Tables 1 to 3.

**Table 1 Pretreatment liquid composition**

| | Composition | |
|---|---|---|
| I | | Mixing ratio |
| | NaOH | : 80% |
| | Chelating agent | : 10% |
| | (Ethylenediaminetetraaceticacid4sodium) | |
| | Surfactant | : 10% |
| | (Polyoxyethylenenonylphenylether) | |
| II | | Mixing ratio |
| | NaOH | : 15% |
| | Na₃PO₄ | : 55% |
| | Chelating agent | : 20% |
| | (Ethylenediaminetetraacetic acid 4 sodium) | |
| | Surfactant | : 10% |
| | (Polyoxyethylenenonylphenylether) | |

**Table 2 Chemical conversion treatment liquid composition**

| | Composition | |
|---|---|---|
| | Common component | Additive component |
| A | | - |
| B | | 0.10% Ni |
| C | 2.00% phosphoric acid | 0.03% Mn |
| D | 1.00% nitric acid | 0.10% Ni |
| | 0.20% fluorine compound | 0.03% Mn |
| E | 0.15% zinc | 0.05% Co |
| F | | 0.06% Mg |
| G | | 0.03% Fe |
| H | | 0.06% Ca |

**Table 3 Composite particle giving treatment conditions**

| Condition No. | Treatment timing | Pretreatment | | Surface preparation treatment | | Chemical conversion treatment | |
|---|---|---|---|---|---|---|---|
| | | Treatment fluid | Treatment conditions | Treatment fluid | Treatment conditions | Treatment fluid | Treatment conditions |
| a | After final annealing | 10% I | 75 °C × 15 seconds | 0.05% Ti colloid | | A | 45 °C × 120 seconds |
| b | After final annealing | 6% I | 75 °C × 60 seconds | 0.1% Ti colloid | | B | 45°C × 15 second |
| c | After final annealing | 2% I | 75 °C × 120 | 1.0% Ti colloid seconds | | C | 45°C × 5 seconds |
| d | After final annealing | 8% II | 75 °C × 30 seconds | 0.3% Ti colloid | 28 °C | D | 45°C × 10 seconds |
| e | After final annealing | 6% II | 75 °C × 60 seconds | 0.05% Ti colloid | 30 seconds | E | 45°C × 10 seconds |
| f | After foil rolling | 6% II | 75 °C × 45 seconds | 0.1% Ti colloid | | F | 45°C × 30 seconds |
| g | After foil rolling | 10% II | 75 °C × 15 seconds | 0.2% Ti colloid | | G | 45°C × 20 seconds |
| h | After foil rolling | 4% II | 75 °C × 60 seconds | 0.5% Ti colloid | | H | 45°C × 15 seconds |

In the pretreatment shown in Fig. 1 and Table 3, the treatment liquids having two kinds of compositions I and II as shown in Table 1 were adjusted to have a concentration as shown in Table 3, and the surface of each foil substrate was washed using the treatment liquid. Furthermore, in the surface preparation treatment, Ti colloids different in density were used as treatment liquid. Each foil substrate was immersed in the Ti colloid fluid to perform the surface preparation treatment for depositing fine zinc phosphate composite particles. Furthermore, in the chemical conversion treatment, eight kinds of chemical conversion treatment liquids A to H shown in Table 2 were used. Fluorine compounds and each metal compounds used in the treatment liquid are as follows.

| | |
|---|---|
| Fluorine compound | : HF |
| Zinc | : ZnO |
| Nickel | : Ni(OH)₂ |
| Manganese | : MnCO₃·nH₂O |
| Cobalt | : CoSO₄·7H₂O |
| Magnesium | : MgCO₃·Mg(OH)₂·nH₂O |
| Iron | : Fe(NO₃)₂·9H₂O |
| Calcium | : CaCl₂·2H₂O |

### [Experimental example 1]

Foil substrates 100 µm thick were manufactured from a slab of 99.99% aluminum purity, then subjected to zinc phosphate composite particle giving treatment under the conditions of "a" to "h" shown in Table 3, and thereafter subjected to final annealing at 500 °C.

The zinc phosphate composite particle given foil substrates were subjected to image analysis by enlarging the image 2,000 times using a scanning electron microscope to thereby obtain the mean circle equivalent diameter of the adhered zinc phosphate composite particle and the number of zinc phosphate composite particles whose circle equivalent diameter is 0.1 µm or more. Further, the foil substrates were immersed in 5% Chromic anhydride liquid for five minutes at a normal temperature to dissolve the particles, and then the weights of the adhered particles were obtained from the weight difference between the foil substrate before the immersion and that after the immersion.

On the other hand, the zinc phosphate composite particle given foil substrates were subjected to direct-current electrolysis etching at the current density of 0.1 A/cm² by adjusting the electricity so that the dissolving rate of the foil became 40%. Subsequently, each etched foil was subjected to chemical conversion treatment of 250 voltage in 5%boric acid + 0.1% ammonium borate at 80 °C, and the capacitance thereof was measured in 3%-ammonium borate. Furthermore, a foil with no zinc phosphate composite particle giving treatment was prepared as a comparative example, and the foil was subjected to direct-current electrolysis etching and chemical conversion treatment and the capacitance thereof was measured in the same manner as the treated foil.

Each measured result is shown in Table 4. The capacitance is shown by a relative value when the capacitance of the comparative example is 100%.

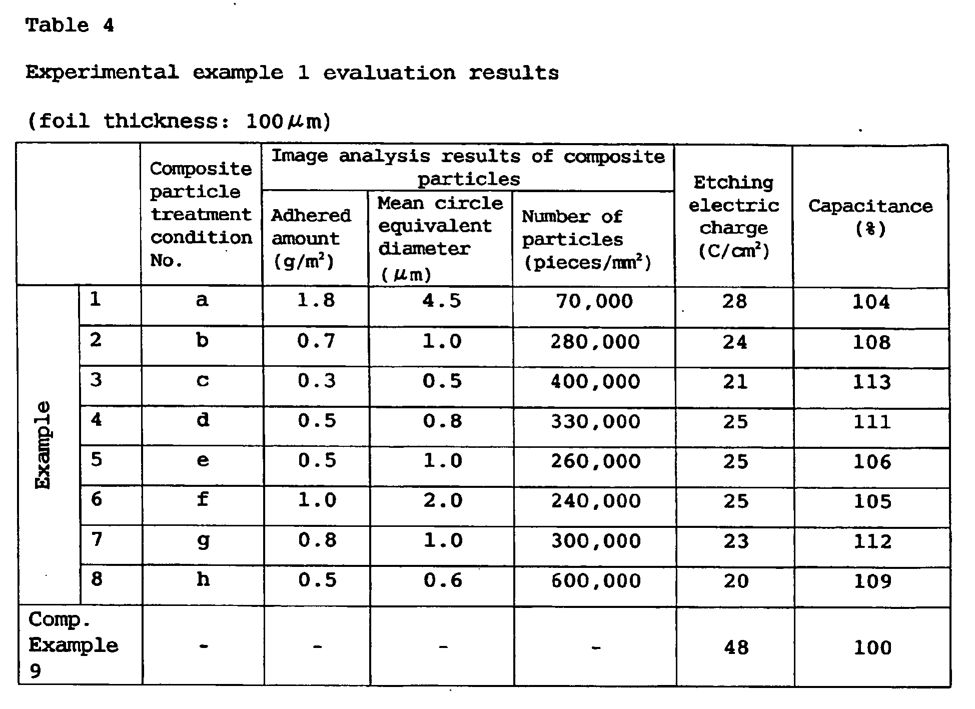

### [Experimental example 2]

Foil substrates 90 µm thick were manufactured from a slab of 99.98% aluminum purity, then subjected to zinc phosphate composite particle giving treatment under the conditions of "b" to "e" shown in Table 3. No final annealing was performed.

The zinc phosphate composite particle given foil substrates were subjected to image analysis and the number of zinc phosphate composite particles and the weights of the adhered particles were obtained in the same manner as the aforementioned experimental example 1.

On the other hand, the zinc phosphate composite particle given foil substrates were subjected to alternating current electrolysis etching at the current density of 0.2 A/cm² in 10% hydrochloric acid + 0.1% sulfuric acid by adjusting the electricity so that the dissolving rate of the foil became 40%. Subsequently, each etched foil was subjected to chemical conversion treatment of 20 voltage in 10% ammonium adipate at 80°C, and the capacitance thereof was measured in 3%-ammonium borate. Furthermore, a foil with no zinc phosphate composite particle giving treatment was prepared as a comparative example, and the foil was subjected to alternating current electrolysis etching and chemical conversion treatment, and the capacitance thereof was measured in the same manner as the treated foil.

Each measured result is shown in Table 5. The capacitance is shown by a relative value when the capacitance of the comparative example is 100%.

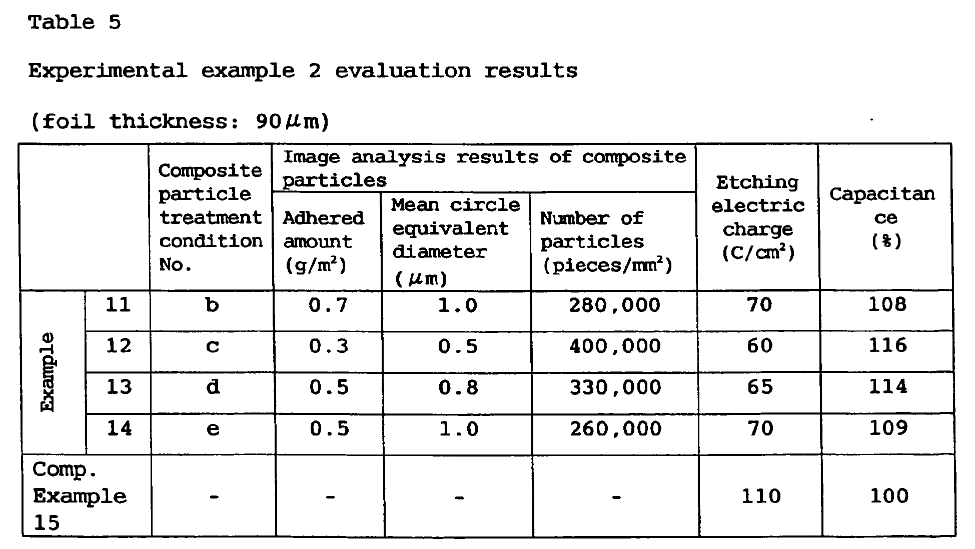

### [Experimental example 3]

Foil substrates 50 µm thick were manufactured from a slab of 99.8% aluminum purity, then subjected to zinc phosphate composite particle giving treatment under the conditions of "b" to "e" shown in Table 3, and then final annealing was performed at 300 °C.

The zinc phosphate composite particle given foil substrates were subjected to image analysis and the weights of the adhered particles were obtained in the same manner as the aforementioned experimental example 1. ,

On the other hand, the zinc phosphate composite particle given foil substrates were subjected to alternating current electrolysis etching at the current density of 0.2 A/cm² in 10% hydrochloric acid + 0.1% phosphoric acid + 0.2% nitric acid by adjusting the electricity so that the dissolving rate of the foil became 30%. Subsequently, the capacitance of each etched foil was measured in 3%-ammonium borate. Furthermore, a foil with no zinc phosphate composite particle giving treatment was prepared as a comparative example, and the foil was subjected to alternating current electrolysis etching and chemical conversion treatment, and the capacitance thereof was measured in the same manner as the treated foil.

Each measured result is shown in Table 6. The capacitance is shown by a relative value when the capacitance of the comparative example is 100%.

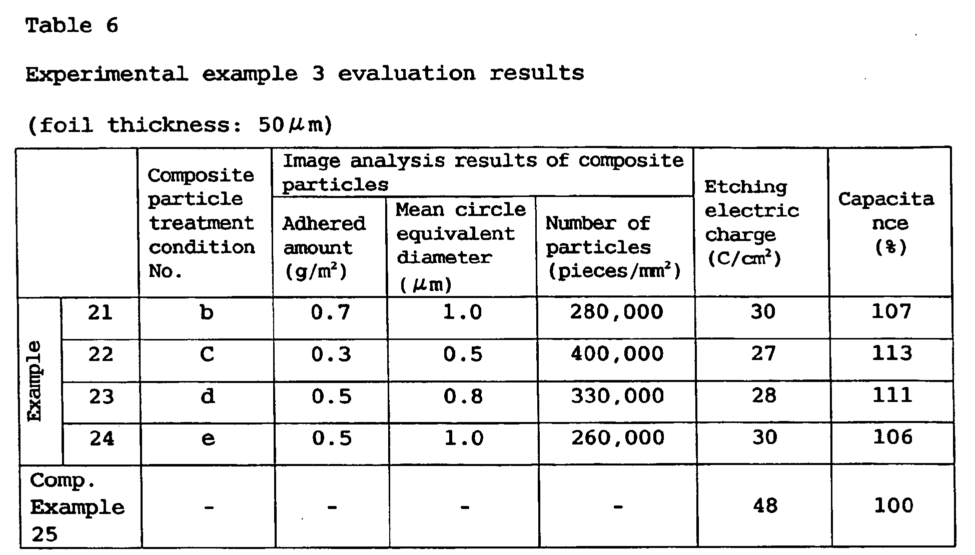

From the results shown in Tables 4 to 6, it is confirmed that the foil to which zinc phosphate composite particle giving treatment was executed can obtain higher capacitance by about 60% etching electric charge as compared with the foil to which no zinc phosphate composite particle giving treatment was executed.

The terms and expressions which have been employed herein are used as terms of description and not of limitation, and there is no intent, in the use of such terms and expressions, of excluding any of the equivalents of the features shown and described or portions thereof, but it is recognized that various modifications are possible within the scope of the invention claimed.

### Industrial Applicability

An aluminum foil for electrolytic capacitor electrodes can obtain high capacitance by increasing the surface increasing rate, and therefore can be used for various electronics device, especially miniaturized electronics devices.

## Claims

1. An aluminum foil for electrolytic capacitor electrodes, **characterized in that** zinc phosphate composite particles containing at least zinc and phosphorous are adhered to a surface of a foil substrate.

2. The aluminum foil for electrolytic capacitor electrodes as recited in claim 1, wherein the zinc phosphate composite particles each having a mean circle equivalent diameter of 0.1 µm or more are adhered to the surface of the foil substrate at a rate of 70,000 pieces/mm² or more, and the adhered amount thereof is 0.01 to 5 g/m².

3. The aluminum foil for electrolytic capacitor electrodes as recited in claim 2, wherein the zinc phosphate composite particles each having a mean circle equivalent diameter of 0.3 µm or more are adhered to the surface of the foil substrate at a rate of 200,000 pieces/mm² or more.

4. The aluminum foil for electrolytic capacitor electrodes as recited in claim 2 or 3, wherein the adhered amount of the zinc phosphate composite particles is 0.1 to 3 g/m².

5. The aluminum foil for electrolytic capacitor electrodes as recited in claim 1, wherein the zinc phosphate composite particles further contain one or more elements selected from the group consisting of iron, manganese, nickel, cobalt, calcium and magnesium.

6. The aluminum foil for electrolytic capacitor electrodes as recited in claim 5, wherein the zinc phosphate composite particles each having a mean circle equivalent diameter of 0.1 µm or more are adhered to the surface of the foil substrate at a rate of 70,000 pieces/mm² or more, and the adhered amount thereof is 0.01 to 5 g/m².

7. The aluminum foil for electrolytic capacitor electrodes as recited in claim 6, wherein the zinc phosphate composite particles each having a mean circle equivalent diameter of 0.3 µm or more are adhered to the surface of the foil substrate at a rate of 200,000 pieces/mm² or more.

8. The aluminum foil for electrolytic capacitor electrodes as recited in claim 6 or 7, wherein the adhered amount of the zinc phosphate composite particles is 0.1 to 3 g/m².

9. A method of manufacturing an aluminum foil for electrolytic capacitor electrodes, **characterized in that** a foil substrate is subjected to chemical conversion treatment to deposit zinc phosphate composite particles containing at least zinc and phosphorous on a surface of the foil substrate by immersing the foil substrate in treatment liquid containing phosphoric acid, fluorine compound, zinc or zinc compound and pro-oxidant.

10. The method of manufacturing an aluminum foil for electrolytic capacitor electrodes as recited in claim 9, wherein the chemical conversion treatment is performed after a foil rolling step but before a final annealing step in aluminum foil manufacturing steps.

11. The method of manufacturing an aluminum foil for electrolytic capacitor electrodes as recited in claim 9, wherein the chemical conversion treatment is performed after a final annealing step in aluminum foil manufacturing steps.

12. The method of manufacturing an aluminum foil for electrolytic capacitor electrodes as recited in any one of claims 9 to 11, wherein surface preparation treatment is performed before the chemical conversion treatment.

13. The method of manufacturing an aluminum foil for electrolytic capacitor electrodes as recited in claim 9, wherein the zinc phosphate composite particles further contain one or more elements selected from the group consisting of iron, manganese, nickel, cobalt, calcium and magnesium and wherein the treatment liquid further contains one or more elements selected from the group consisting of iron, manganese, nickel, cobalt, calcium and magnesium and compound thereof.

14. The method of manufacturing an aluminum foil for electrolytic capacitor electrodes as recited in claim 13, wherein the chemical conversion treatment is performed after a foil rolling step but before a final annealing step in aluminum foil manufacturing steps.

15. The method of manufacturing an aluminum foil for electrolytic capacitor electrodes as recited in claim 13, wherein the chemical conversion treatment is performed after a final annealing step in aluminum foil manufacturing steps.

16. The method of manufacturing an aluminum foil for electrolytic capacitor electrodes as recited in any one of claims 13 to 15, wherein surface preparation treatment is performed before the chemical conversion treatment.

## Patentansprüche

1. Eine Aluminiumfolie für elektrolytische Kondensatorelektroden, **dadurch gekennzeichnet, dass** Zinkphosphat-Verbundteilchen, die mindestens Zink und Phosphor enthalten, an einer Oberfläche eines Foliensubstrats anhaften.

2. Die Aluminiumfolie für elektrolytische Kondensatorelektroden wie in Anspruch 1 angegeben, wobei die Zinkphosphat-Verbundteilchen, die jeweils einen durchschnittlichen Äquivalenz-Kreisdurchmesser von 0.1 µm oder mehr haben, an der Oberfläche des Foliensubstrats mit einer Rate von 70000 Teilchen/mm² oder mehr anhaften und wobei die davon anhaftende Menge 0.01 bis 5 g/m² ist.

3. Die Aluminiumfolie für elektrolytische Kondensatorelektroden wie in Anspruch 2 angegeben, wobei die Zinkphosphat-Verbundteilchen, die jeweils einen durchschnittlichen Äquivalenz-Kreisdurchmesser von 0.3 µm oder mehr haben, an der Oberfläche des Foliensubstrats mit einer Rate von 200000 Teilchen/mm² oder mehr anhaften.

4. Die Aluminiumfolie für elektrolytische Kondensatorelektroden wie in Anspruch 2 oder 3 angegeben, wobei die anhaftende Menge der Zinkphosphat-Verbundteilchen 0.1 bis 3 g/m² ist.

5. Die Aluminiumfolie für elektrolytische Kondensatorelektroden wie in Anspruch 1 angegeben, wobei die Zinkphosphat-Verbundteilchen weiter ein oder mehrere Elemente enthalten, die aus der Gruppe, die aus Eisen, Mangan, Nickel, Kobalt, Calcium und Magnesium besteht, ausgewählt werden.

6. Die Aluminiumfolie für elektrolytische Kondensatorelektroden wie in Anspruch 5 angegeben, wobei die Zinkphosphat-Verbundteilchen, die jeweils einen durchschnittlichen Äquivalenz-Kreisdurchmesser von 0.1 µm oder mehr haben, an der Oberfläche des Foliensubstrats mit einer Rate von 70000 Teilchen/mm² oder mehr anhaften und wobei die davon anhaftende Menge ist 0.01 bis 5 g/m².

7. Die Aluminiumfolie für elektrolytische Kondensatorelektroden wie in Anspruch 6 angegeben, wobei die Zinkphosphat-Verbundteilchen, die jeweils einen durchschnittlichen Äquivalenz-Kreisdurchmesser von 0.3 µm oder mehr haben, an der Oberfläche des Foliensubstrats mit einer Rate von 200000 Teilchen/mm² oder mehr anhaften.

8. Die Aluminiumfolie für elektrolytische Kondensatorelektroden wie in Anspruch 6 oder 7 angegeben, wobei die anhaftende Menge der Zinkphosphat-Verbundteilchen 0.1 bis 3 g/m² ist.

9. Ein Verfahren zur Herstellung einer Aluminiumfolie für elektrolytische Kondensatorelektroden, **dadurch gekennzeichnet, dass** ein Foliensubstrat einer chemischen Umwandlungsbehandlung unterzogen wird, um Zinkphosphat-Verbundteilchen, die mindestens Zink und Phosphor enthalten, auf eine Oberfläche des Foliensubstrats durch Eintauchen des Foliensubstrats in Behandlungsflüssigkeit, die Phosphorsäure, eine Fluorverbindung, Zink oder eine Zinkverbindung und ein Pro-Oxidationsmittel enthält, abzuscheiden.

10. Das Verfahren zur Herstellung einer Aluminiumfolie für elektrolytische Kondensatorelektroden wie in Anspruch 9 angegeben, wobei die chemische Umwandlungsbehandlung nach einem Folienwalz-Schritt aber vor einem letzten Glüh-Schritt der Aluminiumfolien-Herstellungsschritte durchgeführt wird.

11. Das Verfahren zur Herstellung einer Aluminiumfolie für elektrolytische Kondensatorelektroden wie in Anspruch 9 angegeben, wobei die chemische Umwandlungsbehandlung nach einem letzten Glüh-Schritt der Aluminiumfolien-Herstellungsschritte durchgeführt wird.

12. Das Verfahren zur Herstellung einer Aluminiumfolie für elektrolytische Kondensatorelektroden wie in einem der Ansprüche 9 bis 11 angegeben, wobei eine Oberflächenvorbereitungsbehandlung vor der chemischen Umwandlungsbehandlung durchgeführt wird.

13. Das Verfahren zur Herstellung einer Aluminiumfolie für elektrolytische Kondensatorelektroden wie in Anspruch 9 angegeben, wobei die Zinkphosphat-Verbundteilchen weiter ein oder mehrere Elemente enthalten, die aus der Gruppe, die aus Eisen, Mangan, Nickel, Kobalt, Calcium und Magnesium besteht, ausgewählt werden und wobei die Behandlungsflüssigkeit weiter ein oder mehrere Elemente enthält, die aus der Gruppe, die aus Eisen, Mangan, Nickel, Kobalt, Calcium und Magnesium besteht, ausgewählt werden.

14. Das Verfahren zur Herstellung einer Aluminiumfolie für elektrolytische Kondensatorelektroden wie in Anspruch 13 angegeben, wobei die chemische Umwandlungsbehandlung nach einem Folienwalz-Schritt aber vor einem letzten Glüh-Schritt der Aluminiumfolien-Herstellungsschritte durchgeführt wird.

15. Das Verfahren zur Herstellung einer Aluminiumfolie für elektrolytische Kondensatorelektroden wie in Anspruch 13 angegeben, wobei die chemische Umwandlungsbehandlung nach einem letzten Glüh-Schritt der Aluminiumfolien-Herstellungsschritte durchgeführt wird.

16. Das Verfahren zur Herstellung einer Aluminiumfolie für elektrolytische Kondensatorelektroden wie in einem der Ansprüche 13 bis 15 angegeben, wobei die Oberflächenvorbereitungsbehandlung vor der chemischen Umwandlungsbehandlung durchgeführt wird.

## Revendications

1. Feuille d'aluminium destinée à des électrodes de condensateur électrolytique, **caractérisée en ce que** des particules composites de phosphate de zinc contenant au moins du zinc et du phosphore adhèrent à une surface d'un substrat de feuille.

2. Feuille d'aluminium destinée à des électrodes de condensateur électrolytique selon la revendication 1, dans laquelle les particules composites de phosphate de zinc présentant chacune un diamètre de cercle équivalent moyen égal à 0,1 µm ou plus, sont faites adhérer à la surface du substrat de feuille à un taux de 70.000 parties/mm² ou plus, et la quantité de celles-ci qui ont adhéré est comprise entre 0,01 g/m² et 5 g/m².

3. Feuille d'aluminium destinée à des électrodes de condensateur électrolytique selon la revendication 2, dans laquelle les particules composites de phosphate de zinc comprenant chacune un diamètre de cercle équivalent moyen égal à 0,3 µm ou plus, sont faites adhérer à la surface du substrat de feuille à un taux de 200 000 parties/mm² ou plus.

4. Feuille d'aluminium destinée à des électrodes de condensateur électrolytique selon la revendication 2 ou la revendication 3, dans laquelle la quantité de particules composites de phosphate de zinc qui ont adhéré est comprise entre 0,1 g/m² et 3 g/m².

5. Feuille d'aluminium destinée à des électrodes de condensateur électrolytique selon la revendication 1, dans laquelle les particules composites de phosphate de zinc contiennent en outre un ou plusieurs éléments choisis dans le groupe constitué par le fer, le manganèse, le nickel, le cobalt, le calcium et le magnésium.

6. Feuille d'aluminium destinée à des électrodes de condensateur électrolytique selon la revendication 5, dans laquelle les particules composites de phosphate de zinc présentant chacune un diamètre de cercle équivalent moyen égal à 0,1 µm ou plus, sont faites adhérer à la surface du substrat de feuille à un taux de 70.000 parties/mm² ou plus, et la quantité de celles-ci qui ont adhéré est comprise entre 0,01 g/m² et 5 g/m².

7. Feuille d'aluminium destinée à des électrodes de condensateur électrolytique selon la revendication 6, dans laquelle les particules composites de phosphate de zinc présentant chacune un diamètre de cercle équivalent moyen égal à 0,3 µm ou plus, sont faites adhérer à la surface du substrat de feuille à un taux de 200 000 parties/mm² ou plus.

8. Feuille d'aluminium destinée à des électrodes de condensateur électrolytique selon la revendication 6 ou la revendication 7, dans laquelle la quantité de particules composites de phosphate de zinc qui ont adhéré est comprise entre 0,1 g/m² et 3 g/m².

9. Procédé de fabrication d'une feuille d'aluminium destinée à des électrodes de condensateur électrolytique, **caractérisé en ce qu'**un substrat de feuille est soumis à un traitement de conversion chimique destiné à déposer des particules composites de phosphate de zinc qui contiennent au moins du zinc et du phosphore sur une surface du substrat de feuille en immergeant le substrat de feuille dans un liquide de traitement qui contient de l'acide phosphorique, un composé de fluor, du zinc ou un composé de zinc et un pro-oxydant.

10. Procédé de fabrication d'une feuille d'aluminium destinée à des électrodes de condensateur électrolytique selon la revendication 9, dans lequel le traitement de conversion chimique est exécuté après une étape de laminage de la feuille mais avant une étape finale de recuit lors des étapes de fabrication de la feuille d'aluminium.

11. Procédé de fabrication d'une feuille d'aluminium destinée à des électrodes de condensateur électrolytique selon la revendication 9, dans lequel le traitement de conversion chimique est exécuté après une étape de recuit finale lors des étapes de fabrication de la feuille d'aluminium.

12. Procédé de fabrication d'une feuille d'aluminium destinée à des électrodes de condensateur électrolytique selon l'une quelconque des revendications 9 à 11, dans lequel le traitement de préparation de surface est exécuté avant le traitement de conversion chimique.

13. Procédé de fabrication d'une feuille d'aluminium destinée à des électrodes de condensateur électrolytique selon la revendication 9, dans lequel les particules composites de phosphate de zinc contiennent en outre un ou plusieurs éléments choisis dans le groupe constitué par le fer, le manganèse, le nickel, le cobalt, le calcium et le magnésium et dans lequel le liquide de traitement contient en outre un ou plusieurs éléments choisis dans le groupe constitué par le fer, le manganèse, le nickel, le cobalt, le calcium et le magnésium et des composés de ceux-ci.

14. Procédé de fabrication d'une feuille d'aluminium destinée à des électrodes de condensateur électrolytique selon la revendication 13, dans lequel le traitement de conversion chimique est exécuté après une étape de laminage de la feuille mais avant une étape finale de recuit lors des étapes de fabrication de la feuille d'aluminium.

15. Procédé de fabrication d'une feuille d'aluminium destinée à des électrodes de condensateur électrolytique selon la revendication 13, dans lequel le traitement de conversion chimique est exécuté après une étape de recuit finale lors des étapes de fabrication de la feuille d'aluminium.

16. Procédé de fabrication d'une feuille d'aluminium destinée à des électrodes de condensateur électrolytique selon l'une quelconque des revendications 13 à 15, dans lequel le traitement de préparation de surface est exécuté avant le traitement de conversion chimique.
